**Europäisches Patentamt**

(19) **European Patent Office**

**Office européen des brevets**

(11) Publication number: **0 200 447**
**A2**

(12) # EUROPEAN PATENT APPLICATION

(21) Application number: **86302969.0**

(22) Date of filing: **21.04.86**

(51) Int. Cl.⁴: **H 04 Q 9/14**
**H 02 J 13/00**

(30) Priority: **30.04.85 GB 8510973**

(43) Date of publication of application:
**05.11.86 Bulletin 86/45**

(84) Designated Contracting States:
**DE FR GB IT NL SE**

(71) Applicant: **EMI Limited**
**Blyth Road**
**Hayes Middlesex, UB3 1BP(GB)**

(72) Inventor: **Smelt, Newark George**
**12, Elderfield Road**
**Stoke Poges Slough Berkshire, SL2 4DE(GB)**

(72) Inventor: **Trask, Jeremy Robin**
**45, Windsor Road**
**Ealing London, W5 3UP(GB)**

(74) Representative: **Fleming, Ian Alexander et al,**
**THORN EMI Patents Limited The Quadrangle**
**Westmount Centre Uxbridge Road**
**Hayes Middlesex, UB4 0HB(GB)**

(54) **Data transmission system.**

(57) The domestic communication network 1 has a main control unit 2 which can selectively address sixteen separate stations 3 by sending signals along the common electrical mains wiring 4. Each station 3 has a unique four-bit address identity, while each signal sent out by control unit 2 has an address signal (formed of a four-bit address word and a mask code) and a data signal. The mask code informs the stations of how many bits in the address word are to be ignored.

Each station 3 has a unit 5 to extract, from the address signal, the mask code and input it to subtractors 6 and 7, for modification of the station identity and the received signal to the same number of most-significant bits. Suitable equivalence at a comparator 9 actuates a switch 10 for activation of a circuit 11.

EP 0 200 447 A2

./...

Fig.1

: 1 :

## DATA TRANSMISSION SYSTEM

The present invention relates to a data transmission system especially but not solely a communication network which makes use of the electrical supply wiring, and to a method of operating such a system.

In a typical communication network which makes use of the electrical supply wiring, data signals are sent from a main control to remote stations (each representing an electrical appliance or a detector) utilizing the low-voltage domestic mains distribution cable as the transmission medium. It is desirable for the main control to be able to address data to the stations in a number of alternative different ways, as required; thus the control should be able to address the stations singly, or in groups of stations, or all the stations together. One conventional method of achieving this capability is to provide each station with a number of address identities, of which one is unique to that station alone; the station also has one address identity unique to each group of stations of which it is a member, and one address identity which it shares with all the other stations in the network (thereby enabling all stations to be addressed simultaneously when required). Thus a station may have many separate address identities, thereby tending to produce prolonged processing of any received signals when trying to determine whether they are addressing the particular station. Also, a network using such an addressing method is not conducive to changes in the number of stations constituting the network nor to changes in the grouping of the stations.

Another form of such a communication network is disclosed in UK Patent Specification Publication No.2004101B. In this network, each unit is identified by a 19 bit address, but the transmitted address has an additional bit (known as the "mode portion"). By appropriate selection of values for the mode portion and certain of the address bits, various ranges of unit-addressing can be achieved, namely addressing of : a single unit; units with matching address bits 1 to 16; units with matching address bits 17 to 19; or all units.

The present invention provides a data transmission system characterised by:

a main control unit;

a plurality of remote stations, each having one address identity, unique in the system, formed of a specified number of bits;

the control unit having means to send, to the stations, an address signal which comprises two sections, of which one contains an address word having the specified number of bits and the other contains a mask code designating the number of bits to be disregarded in the address word according to a predetermined sequence;

each of the stations having means to compare a received address signal with its address identity and means to effect appropriate action.

Preferably the control unit has means to send, to the stations, an address signal which comprises two sections, of which one contains an address word having the specified number of bits and the other contains a mask code designating the number of least-significant bits in the address word to be disregarded.

Preferably, one or more of the stations has means to provide a signal representing its address identity modified by a received mask code, means to provide a signal representing a received address word modified by the associated mask code, means to compare the two modified signals and means to effect appropriate action.

In another aspect, the present invention provides a control unit for a data transmission system, the control unit having means to send, to the stations, an address signal which comprises two sections, of which one contains an address word having a specified number of bits and the other contains a mask code designating the number of bits to be disregarded in the address word according to a predetermined sequence.

Preferably, the mask code of the address signal designates the number of least-significant bits in the address word to be disregarded.

In another aspect, the present invention provides a remote unit for a data transmission system, the station having means to provide a signal representing its address identity modified by a received mask code, means to provide a signal representing a received address word modified by the associated mask code, means to compare the two modified signals and means to effect appropriate action.

In order for the main control unit to transmit data to a single station, the main control unit sends out an address signal consisting of one section with an address word corresponding to the appropriate station and another section with a mask code indicating that no bits of the address word are to be disregarded. Thus the stations will receive instructions to note the entire address word during the address-comparison operation, and clearly there is only one station with an address identity the same as a complete address word.

In order for the main control unit to transmit data to a group of stations, the main control unit sends out an address signal consisting of one section with an address word and another section with a mask code indicating that, for example, the least-significant bit of the address word is to be disregarded. Taking, as a particular example, a system which employs four-bit address words, then each station will compare the three most-significant bits of its address identity with the three most-significant bits of the address word, there being more than one station in which these two values correspond.

In order for the main control unit to transmit data to all the stations, the main control unit sends out an address signal having a mask code indicating that all the bits of the address word are to be disregarded; clearly all the stations accordingly satisfy the addressing criterion and therefore all will receive the relevant data from the main control unit.

Generally, if a data transmission system has station address identities having a number N of bits, then the system can have a maximum of $2^N$ stations each with a unique address identity; if the main control unit sends out an address signal with a mask code indicating that M least-significant bits are to be disregarded, then $2^M$ stations of the system will respond to that address signal.

According to another aspect, the present invention also provides a method of operating a data transmission system with a main control unit and a plurality of remote stations, each of which has one address identity, unique in the system, formed of a specified number of bits, the method characterised by:-

the control unit sending, to the stations, an address signal which comprises two sections, of which one contains an address word and the other contains a mask code designating the number of bits to be disregarded in the address word according to a predetermined sequence;

each of the stations comparing the received address signal with the address identity and then effecting appropriate action.

Preferably, this method is further characterised by the control unit sending, to the stations, an address signal which comprises two sections, of which one contains an address word and the other contains a mask code designating the number of least-significant bits in the address word to be disregarded.

The data transmission system of the present invention utilises a much simpler, and more flexible, form of addressing than that of the system disclosed in UK Patent Specification No.2004104B. In this prior art system, the mode bit enables, for a 19 bit address, only four ranges of addressing, namely : ignoring none of the addressing bits; ignoring bits 1 to 16; ignoring bits 17 to 19; ignoring all of the addressing bits. In contrast, the system of the present invention enables the units to be instructed to ignore any number of address bits, from zero to the specified number. Moreover, the mask code designates the actual number of bits in the address code to be ignored, rather than merely being an encrypted abbreviation for an instruction; thus processing of the received addressing signal is simpler and faster in the system of the present invention as compared to the prior art. Furthermore, in the prior art system, certain addresses cannot be used for individual unit addresses (namely those in which all of bits 1 to 16 are "1") due to the short-comings of the addressing protocol; no such prohibition is pertinent to the system of the present invention.

The present invention is applicable to communication networks which make use of the electrical supply wiring, and to systems using other suitable forms of transmission for example radio or baseband cable.

In order that the present invention may more readily be understood, a description is now given, by way of example only, reference being made to the accompanying drawings, in which:-

Figure 1 is a schematic diagram of part of a communication network embodying the present invention,

Figure 2 is a table which illustrates the reactions of a number of stations in the network of Figure 1 in response to a variety of address signals; and

Figure 3 is a schematic diagram of a search procedure used in the network of Figure 1.

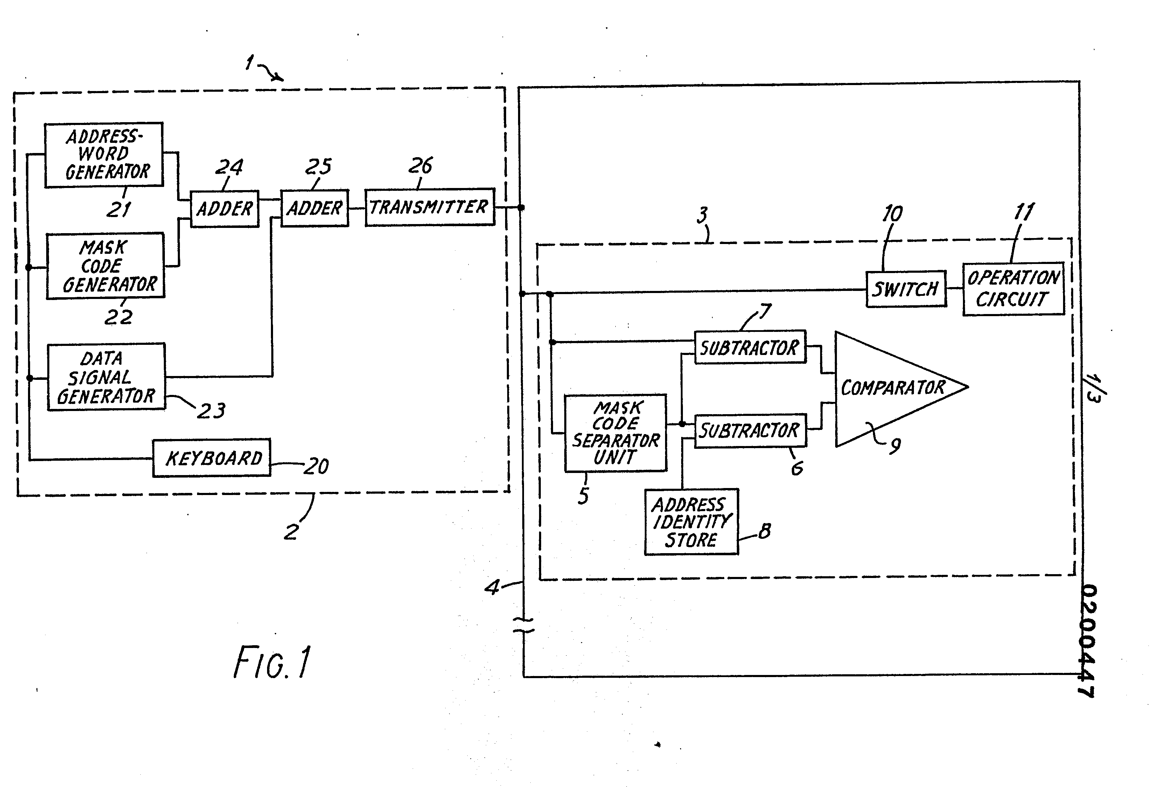

The domestic communication network 1, shown generally in Figure 1 has a main control unit 2 which is able to communicate with one or more of sixteen separate stations (of which only one, numbered 3, is illustrated) by sending signals along the common electrical mains wiring 4. A station may be associated with an electrical appliance (for example a light) and the station may be capable of activating/deactivating that appliance, or of changing its operation, or of communicating its status to the control unit 2, or any combination of these functions. Alternatively a station may be associated with an alarm(for example a burglar alarm, a smoke alarm or a fire alarm), such that the station informs the control unit 2 when the alarm is activated, and at any time the control unit can enquire of the station as to the status of the alarm and optionally change its operating mode. Clearly a network may consist of a combination of different types of station.

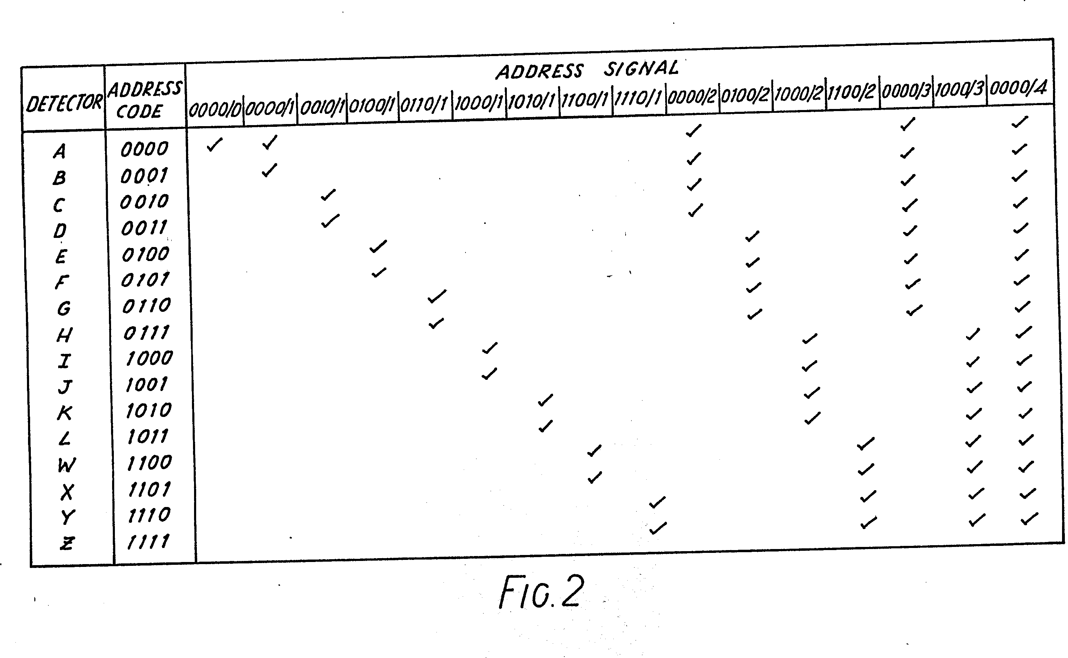

Each of the sixteen stations has an individual four-bit address identity which is unique in the network 1. The table of Figure 2 shows the address identity for each of the sixteen stations which have been named A to Z.

Main control unit 2 has a keyboard 20 selectively connectable to an address-word generator 21, a mask code generator 22, and a data-signal generator 23. Accordingly an operator can formulate any or each of these signal elements by using the keyboard 20 to instruct the relevant generator; clearly other forms of generating the signal elements can additionally or alternatively be used. The address-word and mask code elements are combined at adder 24 to form the address signal, the latter being combined with the data signal at adder 25. The resultant signal passes to transmitter 26 for sending down mains wiring 4.

Each signal sent down mains wiring 4 by control unit 2 has two components, one being an address signal and the other a data signal. Each station inspects the address signal in order to establish whether the signal is intended for that particular station; only if the inspection confirms relevance of the signal to the station will the data signal be allowed to pass into the station in order to suitably operate on it.

Each address signal has two sections, one containing a four-bit address word and the other containing a mask code which gives the stations instruction on how to treat the address word; more specifically, the mask code indicates the number of least-significant bits of the address word which are to be disregarded during the investigation of the address signal by the station. By appropriate choice of values for the address word and mask code, control unit 2 can send down wiring 4 a signal targeted for any single station, or certain groups of stations, or all stations, whichever option is required by the circumstances.

Thus if it were necessary for control unit 2 to send a data signal to station G (see Figure 2), it would transmit into wiring 4 a signal formed of the data signal preceded by an address signal with an address word "0110" and a mask code "0". Thus each station would consider the entire address word when investigating whether the signal is intended for it; only station G will confirm that the address word corresponds to its address identity and accordingly allow in the subsequent, related data signal.

If it were necessary for control unit 2 to send a data signal to stations G and H, then it would transmit a signal formed of the data signal preceded by an address signal with an address word "0110" and a mask code " 1 " (abbreviated in Figure 2 to 0110/1). Each station in network 1 would consider the three most-significant bits of the address word, i.e. "011", and compare them with the three most-significant bits of its own address identity (for example, these being "000" for B, "101" for L and "111" for Y). Clearly, only stations G and H will produce correspondence and accordingly allow in the data signal.

The table of Figure 2 indicates all the permutations of address signals with non-zero mask codes, and the resultant addressed groups stations.

In order to achieve the investigation of an address signal, each station (see Figure 1) has a unit 5 which separates the mask code information from the rest of the address signal and then inputs the mask code to each of two subtractors 6 and 7. Station 3 has an identity store 8 which holds the address identity unique in the network 1 to that station (for example, the store of station D would hold the identity "0011"). Whenever unit 5 feeds subtractor 6 with a mask code, identity store 8 outputs the address identity to subtractor 6 which accordingly operates on these two signals to produce an output corresponding to the address identity to a number of most-significant bits dictated by the mask code. Subtractor 7 receives the address word from control unit 2 and the mask code, and therefore produces an output corresponding to the address word to a number of most-significant bits dictated by the mask code. The outputs of the two subtractors are then input to a comparator 9 which, if correspondence occurs, produces an output signal to trigger switch 10 and thereby allows the data signal to pass to an operation circuit 11 of station 3. If there is no correspondence at comparator 9, then no signal is output to switch 10 which remains deactivated and thereby prevents the data signal from reaching circuit 11.

In normal operation of the network 1, a station only communicates with the main control unit when that station, solely, is polled; when a station receives a group or global signal to which it can match its address, then it accepts the signal but does not respond (for example to confirm receipt or to supply requested data). This is because the main control unit is not able to successfully receive and separate all such simultaneous responses.

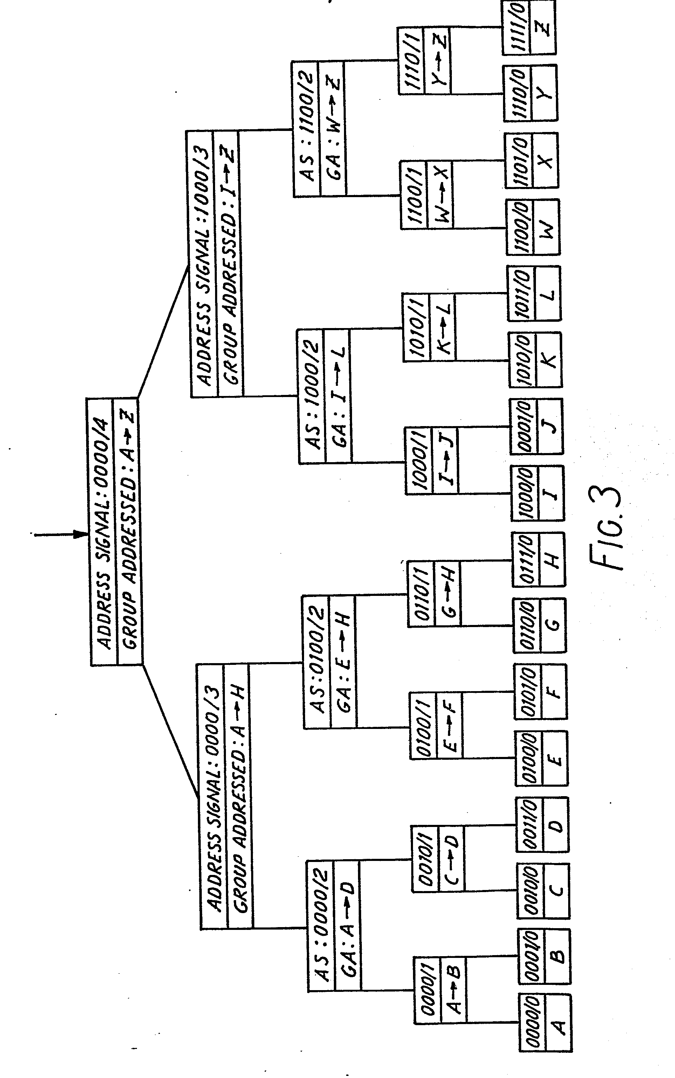

An alternative, emergency mode of the network (namely the "alert-call" procedure) relies on the facts that the main control unit can actually detect that there have been simultaneous responses even though it cannot identify the individual responses themselves and that the response messages enable the master control unit to identify the responding station, i.e. they carry the station address. If when the all-stations "alert call" is issued (address signal 0000/4), only one station actually responds then the master control unit is able to receive the response normally as if it were operating in the normal poll/response mode. If however the master control unit detects that more than one station has responded, then a "tree search" at the higher protocol level is initiated. The "tree search" can be implemented at this higher level due to the versatility of the addressing scheme. The basis of the "tree search" is indicated in Figure 3. Basically the master control unit will issue "alert call" messages to smaller and smaller groups of stations until it can identify a single response message. Thus, following the initial "alert call" failure, an "alert call" with address signal 0000/3 will be issued thereby addressing only stations A to H. If, for instance the original simultaneous responses had come from stations D and W, then station W will not respond to the second call since it is not in the right group; hence the master control unit will be able to receive the response from station D correctly. If the original simultaneous responses had come from stations D and E, then both of these stations will still respond to the second call since they are both still in the addressed group. The master control unit will have to issue further calls addressing smaller groups until it receives a single response from, for example, station D by sending a call with address signal 0000/2. The greater the similarity between addresses of responding units, the further down the tree the master control unit will have to go in order to identify a single response. For instance if stations C and D had originally responded simultaneously then the master control unit will not receive a single station response until it has reached the lowest level of the tree and is addressing a single one of these stations.

The master control unit stops its current "alert call" cycle when it has received one good response, if any. Any conflicting responses will be picked up on the next and subsequent cycles. Alternatively, the master control unit does a full search on each cycle to identify all stations with alert data at that time. Thus, for instance, referring to the earlier example, having issued the call with address signal 0000/3 and received the response from station D the master control unit would then issue a call with address signal 10000/3 and receive the response from station W.

The general aspects of a network embodying the present invention and utilising an n-bit station address and an m-bit address mask (with $2^m \gg n$), will now be described using the following notation:

S  —  The value of an n-bit station address.

S'  —  The value of an n-bit station address after the masking function has been performed.

P  —  The value of an m-bit address mask.

Gr  —  The number of members of a group, given by $2^P$.

An n-bit station address enables up to $2^n$ devices to be uniquely addressed within the system. The mode of addressing, i.e. whether individual, group or global, is determined by the value, P, of the address mask. Individual and global addressing are considered as special cases of group addressing i.e. individual addressing is equivalent to addressing a group with a single-member station and global addressing is equivalent to addressing a group of which all stations are a member.

Each station is assigned a unique address in the range

$0-(2^n-1)$ which is held internally by the station in a form suitable for comparison with received packet addresses. When a station receives a packet it uses the value of the address mask, P, to determine how many of the address bits, starting with the lowest order, should be regarded as "don't care" bits when comparing the received address with the station's unique address. Thus effectively only the most significant (n-P) bits of the received and station addresses are compared for a match. From this it can be seen that a packet carrying an address mask value of P will address a group of $2^P$ stations. The particular group of $2^P$ stations that is addressed depends upon the top (n-P) unmasked address bits. Devices can be addressed individually by having an address mask value P = 0, (Gr=1), such that all n bits of the received and station addresses are compared for a match. Global addressing is accomplished by having the address mask value $P \geqslant n$, $(Gr \geqslant 2^n)$, such that all n address bits are masked and any station address will match the received address. The equality $2^m \geqslant n$ must be fulfilled for global addressing to be possible. The value, P, of the address mask specifies the size of the group. The potential group members are determined by the top (n-P) address bits.

The "base" address of the group, S', will be the value of the n address bits with the lower P address bits set to 0 and the size of the group is $G_r$, thus group members are defined by the range S' to S' + (Gr-1).

CLAIMS

1.   A data transmission system characterised by:

a main control unit (2);

a plurality of remote stations (3), each having one address identity, unique in the system, formed of a specified number of bits;

the control unit (2) having means (20-26) to send, to the stations, an address signal which comprises two sections, of which one contains an address word having the specified number of bits and the other contains a mask code designating the number of bits to be disregarded in the address word according to a predetermined sequence;

each of the stations having means (5-9) to compare a received address signal with its address identity and means (10,11) to effect appropriate action.

2.   A data transmission system according to Claim 1, characterised by the control unit (2) having means (20-26) to send, to the stations, an address signal which comprises two sections, of which one contains an address word having the specified number of bits and the other contains a mask code designating the number of least-significant bits in the address word to be disregarded.

3.   A system according to Claim 1 or Claim 2, characterised by one or more of the stations (3) having means (5, 6, 8) to provide a signal representing its address identity modified by a received mask code, means (5, 7) to provide a signal representing a received address word modified by the associated mask code, means (9) to compare the two modified  signals and means (10, 11) to effect appropriate action.

4.   A control unit for use in a data transmission system the control unit characterised by means (20-26) to send, into the system, an address signal which comprises two sections, of which one contains an address word having a specified number of bits and the other contains a mask code designating the number of bits to be disregarded in the address word according to a predetermined sequence.

5. A control unit according to Claim 4, characterised by the mask code of the address signal designating the number of least-significant bits in the address word to be disregarded.

6. A remote station for a data transmission system, the station characterised by means (3, 5, 11) to receive an address signal which comprises two sections, of which one contains an address word having the specified number of bits and the other contains a mask code designating the number of bits to be disregarded in the address word according to a predetermined sequence, means (5-9) to compare a received address signal with the station address identity and means (10,11) to effect appropriate action.

7. A remote station according to Claim 6, characterised by means (5, 6, 8) to provide a signal representing the station address identity modified by a received mask code, means (5, 7) to provide a signal representing a received address word modified by the associated mask code, means (9) to compare the two modified signals and means (10, 11) to effect appropriate action.

8. A method of operating a data transmission system with a main control unit and a plurality of remote stations, each of which has one address identity, unique in the system, formed of a specified number of bits, the method characterised by:-

the control unit sending, to the stations, an address signal which comprises two sections, of which one contains an address word and the other contains a mask code designating the number of bits to be disregarded in the address word according to a predetermined sequence;

each of the stations comparing the received address signal with the address identity and then effecting appropriate action.

9. A method according to Claim 8, characterised by the control unit sending, to the stations, an address signal which comprises two sections, of which one contains an address word and the other contains a mask code designating the number of least-significant bits in the address word to be disregarded.

10. A method according to Claim 8 or Claim 9, characterised by one or more stations providing a signal representing its address identity modified by a received mask code, the station(s) providing a signal representing a received address word modified by the associated mask code, and the station(s) comparing the two modified signals and then effecting appropriate action.

FIG.1

| DETECTOR | ADDRESS CODE | ADDRESS SIGNAL | | | | | | | | | | | | | | | |
|---|---|---|---|---|---|---|---|---|---|---|---|---|---|---|---|---|---|
| | | 0000/0 | 0000/1 | 0010/1 | 0100/1 | 0110/1 | 1000/1 | 1010/1 | 1100/1 | 1110/1 | 0000/2 | 0100/2 | 1000/2 | 1100/2 | 0000/3 | 1000/3 | 0000/4 |
| A | 0000 | ✓ | ✓ | | | | | | | | ✓ | | | | ✓ | | ✓ |
| B | 0001 | | ✓ | | | | | | | | ✓ | | | | ✓ | | ✓ |
| C | 0010 | | | ✓ | | | | | | | ✓ | | | | ✓ | | ✓ |
| D | 0011 | | | ✓ | | | | | | | ✓ | | | | ✓ | | ✓ |
| E | 0100 | | | | ✓ | | | | | | | ✓ | | | ✓ | | ✓ |
| F | 0101 | | | | ✓ | | | | | | | ✓ | | | ✓ | | ✓ |
| G | 0110 | | | | | ✓ | | | | | | ✓ | | | ✓ | | ✓ |
| H | 0111 | | | | | ✓ | | | | | | ✓ | | | | ✓ | ✓ |
| I | 1000 | | | | | | ✓ | | | | | | ✓ | | | ✓ | ✓ |
| J | 1001 | | | | | | ✓ | | | | | | ✓ | | | ✓ | ✓ |
| K | 1010 | | | | | | | ✓ | | | | | ✓ | | | ✓ | ✓ |
| L | 1011 | | | | | | | ✓ | | | | | | ✓ | | ✓ | ✓ |
| W | 1100 | | | | | | | | ✓ | | | | | ✓ | | ✓ | ✓ |
| X | 1101 | | | | | | | | ✓ | | | | | ✓ | | ✓ | ✓ |
| Y | 1110 | | | | | | | | | ✓ | | | | ✓ | | ✓ | ✓ |
| Z | 1111 | | | | | | | | | ✓ | | | | ✓ | | ✓ | ✓ |

Fig. 2

FIG.3